# EUROPÄISCHE PATENTSCHRIFT

(11) **EP 1 126 945 B1**
(45) Veröffentlichungstag und Bekanntmachung des Hinweises auf die Patenterteilung: **11.06.2003**
(21) Anmeldenummer: 99964348.9
(22) Anmeldetag: 03.11.1999
(51) Int. Cl.: B23D 33/00, B23D 31/00, B23D 23/00, F16F 15/32

(54) **VORRICHTUNG ZUM BIEGEN UND ABTRENNEN EINES ENDSTÜCKS VON EINEM MATERIALSTRANG**
DEVICE FOR BENDING AND SEPARATING AN ENDPIECE FROM A STRAND OF MATERIAL
DISPOSITIF POUR CINTRER ET COUPER UNE PARTIE D'EXTREMITE D'UN CORDON DE MATIERE

(30) Priorität: 04.11.1998 DE 29819494 U
(43) Veröffentlichungstag der Anmeldung: 29.08.2001
(73) Patentinhaber: Irmler, Ingrid, 63329 Egelsbach (DE)
(72) Erfinder: Irmler, Ingrid, 63329 Egelsbach (DE)
(74) Vertreter: Haar, Lucas H., Dipl.-Ing.
(86) Internationale Anmeldenummer: DE9903505
(87) Internationale Veröffentlichungsnummer: WO00025970

(56) Entgegenhaltungen:
- DE-A- 3 924 636
- US-A- 5 201 116

## Beschreibung

Die Erfindung betrifft eine Vorrichtung zum Biegen und Abtrennen eines Endstücks von einem Materialstrang, insbesondere aus Schwermetall, mit einem den Endbereich des Materialstrangs in eine Schneidevorrichtung transportierenden Stellglied und einer gekrümmten Führungs- und Verformungsbahn für den Endbereich des Materialstrangs. Eine Vorrichtung dieser Art ist z.B. aus DE-C-3924636 bekannt.

Vorrichtungen der angegebenen Art werden unter anderem eingesetzt, um von einem Materialstrang aus Blei Auswuchtgewichte zum Auswuchten von Fahrzeugrädern in einer beliebigen für den jeweiligen Auswuchtvorgang geeigneten Größe von einem Materialstrang aus Blei abzutrennen und mit einer für das Anbringen an einem Fahrzeugrad geeigneten Krümmung zu versehen. Der Materialstrang kann hierbei an einer Seite eine Haft- oder Klebeschicht haben, die mit einer dünnen Abziehfolie bedeckt ist, so daß das abgetrennte Gewicht nach Entfemen der Folie an der vorgegebenen Stelle an die Felge des Rades angeklebt werden kann.

Bei einer aus der DE 39 24 636 C2 bekannten Vorrichtung zur Herstellung von Ausgleichsgewichten aus einem Strang aus Blei wird der Endbereich des Stranges über Führungsbauteile in Form von mehreren im Abstand voneinander angeordneten Rollen oder mindest einer gekrümmten Schiene in einer an die Felgenkrümmung angepaßte Krümmung gebracht und mittels eines handbetätigbaren Stellglieds oder einer durch einen Elektromotor antreibbaren Transportrolle einer Austrittsöffnung zugeführt, an der sich ein an einem Messerschlitten befestigtes Messer befindet, mit dem ein abgemessenes, aus der Austrittsöffnung herausragendes Endstück von dem Endbereich des Stranges als Ausgleichsgewicht abtrennbar ist. Die Betätigung des Messers kann von Hand oder durch einen Elektromotor erfolgen. Zur Messung der Größe des Gewichts ist auf der Außenseite der Austrittsöffnung ein Längenmeßgerät mit einem in vorbestimmter Weise gekrümmt verlaufenden Meßmarkenträger angebracht, dessen Krümmung etwa der Krümmung des Endstücks entspricht. Der Meßmarkenträger kann mit einer elektrisch leitenden Zunge versehen sein, die einen voreingestellten Anschlag berührt und dadurch eine vorgewählte Länge des Endstücks einer Steuerung signalisiert, die dann einen Messersteller betätigt. Statt eines Anschlags kann hierbei auch ein Geber in Form einer Lichtschranke verwendet werden. Weist die bekannte Vorrichtung eine von einem Elektromotor angetriebene Transportrolle auf, so kann das Ende des Stranges auch automatisch nach Maßgabe der von dem Rechner der Radauswuchtmaschine herrührenden Gewichtswerte durch Ansteuerung des Elektromotors um ein vorbestimmtes Stück aus der Austrittsöffnung heraustransportiert werden. Mit dieser bekannten Vorrichtung läßt sich die Länge und damit das Gewicht der abgetrennten Ausgleichsgewichte nicht mit der gewünschten Genauigkeit herstellen. Vor allem die automatische Steuerung der Länge des Ausgleichsgewichts über den Vorschub der Transportrolle kann durch von der Beschaffenheit des Materialstrangs abhängigen Schlupf zwischen Transportrolle und Materialstrang und durch Materialablagerungen auf der Transportrolle erheblich gestört sein.

Der Erfindung liegt die Aufgabe zugrunde, eine für vollautomatischen Betrieb geeignete Vorrichtung der eingangs genannten Art zu schaffen, die ein längengenaues Abtrennen von Endstücken vorbestimmter Krümmung von einem Materialstrang ermöglicht, wobei die Länge von Endstück zu Endstück innerhalb bestimmter Grenzen variieren kann.

Die Aufgabe wird erfindungsgemäß dadurch gelöst, daß das Stellglied der Vorrichtung ein mit einer drehbar gelagerten Welle fest verbundenes, scheibenförmiges Kreissegment aufweist, dessen auf einem Kreisbogen liegende Umfangsfläche konzentrisch zur Drehachse der Welle angeordnet ist, daß angrenzend an die Umfangsfläche des Kreissegments ein feststehendes Führungselement vorgesehen ist, das mit dem Kreissegment die Führungs- und Verformungsbahn für den Endbereich des Materialstrangs bildet, daß das Kreissegment eine Spannvorrichtung trägt, durch die der Endbereich des Materialstrangs auf der Umfangsfläche des Kreissegments festspannbar ist, daß an dem Führungselement ein Greifer vorgesehen ist, durch den der Endbereich des Materialstrangs an dem Führungselement festhaltbar ist und daß das Kreissegment durch einen Antrieb in einem begrenzten Drehwinkelbereich in beiden Drehrichtungen bewegbar und der Drehwinkel des Kreissegments zur Bestimmung der Länge des von dem Materialstrang abzutrennenden Endstücks durch den Antrieb steuerbar ist.

Bei der erfindungsgemäßen Vorrichtung wird das Biegen des Endbereichs des Materialstrangs und der maßgenaue Weitertransport relativ zur Schneidevorrichtung von demselben Bauelement, nämlich dem Kreissegment durchgeführt. Die Krümmung des Materialstrangs ist durch die Umfangsfläche des Kreissegments exakt definiert und über den Drehwinkel des Kreissegments ist dementsprechend eine exakte Längen- und damit Gewichtsbestimmung des abgetrennten Endstücks möglich. Durch die relativ große Länge der Berührungsfläche zwischen dem Kreissegment und dem Materialstrang und durch das Festspannen des Materialstrangs auf der Umfangsfläche des Kreissegments mit Hilfe einer Spannvorrichtung wirdweiterhin jeglicher Schlupf beim Weitertransport des Materialstrangs unterbunden. Beim Abtrennen des Endstücks wird der Materialstrang zusätzlich durch einen oder mehrere Greifer an dem Führungselement festgehalten, so daß er durch auftretende Schnittkräfte nicht verschoben werden kann. Die Greifer halten den Materialstrang auch fest, wenn das Kreissegment nach Lösen der Spannvorrichtung in seine Ausgangslage zurückbewegt wird. Durch diese Maßnahmen kann das Endstück mit großer Genauigkeit in der gewünschten Länge abgetrennt werden. Die erfindungsgemäße Vorrichtung kann, je nach Platzverhältnissen, sowohl liegend als auch stehend betrieben werden.

Vorzugsweise ist vorgesehen, daß das Kreissegment sich entgegen der Transportrichtung so weit über die Zuführstelle des Materialstrangs hinaus erstreckt, daß der über eine im wesentliche gerade Bahn zugeführte Materialstrang in allen Stellungen des Kreissegments tangential auf die Umfangsfläche des Kreissegments aufläuft. Ein erheblicher Teil der Biegekräfte wird hierdurch in ruhendem Kontakt an dem Kreissegment abgestützt und dadurch die Reibung des Materialstrangs in der Führung klein gehalten. Vorteilhaft ist auch, wenn bei horizontal angeordneter Drehachse des Kreissegments der Materialstrang im wesentlichen senkrecht von unten dem Kreissegment zugeführt wird. Hierbei sorgt im wesentlichen schon das Gewicht des Materialstrangs dafür, daß der Materialstrang sich krümmend auf die Umfangsfläche des Kreissegments auflegt, so daß eine der Umfangsfläche des Kreissegments gegenüberliegende Führung nahezu unbelastet bleibt.

Die erfindungsgemäße Vorrichtung hat weiterhin den Vorteil, daß durch die Spannvorrichtung des Kreissegments auch kleinere Verformungen und Verwerfungen des Materialstrangs, die zuvor beim Transport verursacht worden sein können, beseitigt werden. Das abgetrennte Endstück hat daher immer die vorgegebene gewünschte Krümmung, wodurch eine störungsfreie Montage gewährleistet ist. Die Spannvorrichtung kann hierzu eine Spannbacke aufweisen, die eine der Umfangsfläche gegenüberliegende, gekrümmte Spannfläche hat, deren Krümmungsradius um das radiale Dickenmaß des Materialstrangs größer ist als der Krümmungsradius der Umfangsfläche. Um mit geringem Betätigungsaufwand geeignet große Spannkräfte erzeugen zu können, kann nach einem weiteren Vorschlag der Erfindung vorgesehen sein, daß zur Betätigung der Spannbacke an dem Kreissegment ein zweiarmiger Hebel angeordnet ist, dessen einer Hebelarm mit der Spannbacke und dessen anderer Hebelarm mit einer Betätigungsvorrichtung verbunden ist, wobei der Drehpunkt, an dem der Hebel in Betätigungsrichtung abgestützt ist, von einem an dem Kreissegment angeordneten Anschlagnocken gebildet ist, an dem der Hebel in der Spannstellung anliegt. Damit die Spannbacke sich in der Lösestellung der Betätigungsvorrichtung von dem Materialstrang abhebt, kann weiterhin eine Rückstellfeder vorgesehen sein, die einerseits an dem Kreissegment und andererseits zwischen dem Drehpunkt und dem Anlenkpunkt der Betätigungsvorrichtung an dem Hebel abgestützt ist und deren Federkraft in Betätigungsrichtung auf den Hebel einwirkt. Diese Anordnung der Rückstellfeder hat den Vorteil, daß ihre Federkraft die Betätigungskraft der Betätigungsvorrichtung unterstützt und bei Ausfall der Betätigungsvorrichtung die Spannbacke in der Spannstellung hält. Nur wenn die Betätigungsvorrichtung in die Lösestellung gebracht wird, bewirkt die Rückstellfeder das Lösen den Spannbacke, indem sie den Hebel an den Anschlagnocken andrückt.

Das feststehende Führungselement kann erfindungsgemäß nur auf einer Seite des Kreissegments angeordnet sein. Dies kann beispielsweise bei einer mehr oder weniger horizontalen Anordnung des Kreissegments ausreichend sein, da dann der Materialstrang durch sein Gewicht in Anlage an dem Führungselement gehalten wird. Befindet sich das Kreissegment in einer vertikalen Ebene, so sind erfindungsgemäß vorzugsweise auf beiden Seiten des Kreissegments Führungselemente in symmetrischer Anordnung vorgesehen. Besonders vorteilhaft ist hierbei eine Ausgestaltung, bei der Umfangsfläche des Kreissegments eine geringere axiale Breite hat als der Materialstrang und bei der das Führungselement aus einer konzentrisch zur Drehachse des Kreissegments gebogenen und neben dem Umfangsrand des Kreissegments angeordneten Schiene mit einer sich in Längsrichtung erstreckenden Führungsnut besteht, deren radial innere Führungsfläche unmittelbar an die Umfangsfläche des Kreissegments angrenzt. Durch diese Ausgestaltung wird der Materialstrang auch beim Zurückfahren des Kreissegments in dem Bereich zwischen der Schneidevorrichtung und dem Kreissegment auf dem Radius der Umfangsfläche geführt und abgestützt.

Nach einem weiteren Vorschlag der Erfindung kann die Vorrichtung auf der dem Kreissegment abgekehrten Seite der Schneidevorrichtung einen Übergabegreifer für das aus der Schneidevorrichtung herausragende Endstück aufweisen. Durch den Übergabegreifer wird das abgetrennte Endstück festgehalten und gegebenenfalls in eine Position transportiert, aus der es leicht von Hand oder durch einen Roboter entnommen werden kann. Für die Weitergabe des Endstücks, insbesondere an einen Roboter, der dieses beispielsweise an einem Fahrzeugrad anbringen soll, ist es erforderlich, daß die Position der Mitte des Endstücks bei der Übergabe genau festliegt. Um dies zu erreichen, kann erfindungsgemäß der Übergabegreifer so gesteuert werden, daß er jeweils nur den halben Transporthub des Kreissegments ausführt. Auf diese Weise befindet sich der Übergabegreifer jeweils in der Mitte des Endstücks, gleichgültig ob dieses eine große oder eine kleine Länge hat. Eine vorteilhafte Ausgestaltung kann hierbei darin bestehen, daß der Übergabegreifer auf der Welle des Kreissegments frei drehbar gelagert ist und durch ein Getriebe mit einem Übersetzungsverhältnis von 2 mit dem Kreissegment verbunden ist.

Um zu erreichen, daß der Übergabegreifer der durch die Schneidevorrichtung beim Schneiden erzeugten Bewegung des Endstücks in Umfangsrichtung folgen kann, kann nach einem weiteren Vorschlag der Erfindung der Übergabegreifer über eine einseitig wirkende elastische Kupplung mit dem Getriebe gekuppelt sein. Hierdurch werden Zwangskräfte vermieden und es wird sichergestellt, daß sich die Greiferposition am abgetrennten Endstück während des Schneidevorgangs nicht verändert. Da beim Abtrennen des Endstücks der Endbereich des Materialstrangs an dem Führungselement festgespannt ist, können beim Schneidvorgang an den keilförmigen Messern der Schneidevorrichtung ebenfalls Zwangskräfte auftreten. Um dies zu vermeiden, kann die Schneidevorrichtung erfindungsgemäß auf einem Schlitten angeordnet sein, der tangential zur Drehachse des Kreissegments beweglich gelagert ist. Federnde Mittel sorgen dafür, daß die Schneidevorrichtung nach jedem Schneidvorgang in ihre Ausgangslage zurückbewegt wird.

Die erfindungsgemäße Vorrichtung ist auch zur Verarbeitung von einem Materialstrang bestimmt, der auf seiner dem Kreissegment abgekehrten Außenseite einen sich in Längsrichtung erstreckenden Haftstreifen aufweist, der von einem Folienstreifen abgedeckt ist. Damit der Haftstreifen mit dem Seitenrand nicht in Kontakt mit seinem Führungselement kommen und dadurch den Transport des Materialstrangs behindern kann, weist nach einem weiteren Vorschlag der Erfindung das Führungselement im Bereich des Haftstreifens eine Freisparung auf. Weiterhin kann erfindungsgemäß vor der Schneidevorrichtung eine Trenneinrichtung angeordnet sein, durch die der Folienstreifen von dem Haftstreifen getrennt und abgeführt wird.

Ausführungsbeispiele der Erfindung sind in der Zeichnung dargestellt und werden im folgenden näher beschrieben. Es zeigen
- Figur 1: eine Draufsicht einer liegend angeordneten Ausführungsform eines erfindungsgemäßen Ablängautomaten,
- Figur 2: einen Zentrumsschnitt des Ablängautomaten gemäß Figur 1,
- Figur 3: eine Detaildarstellung des Mitnehmers und Übergabegreifers des Ablängautomaten gemäß Figur 1,
- Figur 4: eine Draufsicht der Schneidevorrichtung des Ablängautomaten gemäß Figur 1,
- Figur 5: eine Seitenansicht der Schneidevorrichtung gemäß Figur 4,
- Figur 6: eine Draufsicht einer Abschäleinrichtung mit Hohlkehlmesser,
- Figur 7: eine Seitenansicht der Abschäleinrichtung gemäß Figur 6,
- Figur 8: eine Seitenansicht eines ersten Greifers des Ablängautomaten gemäß Figur 1,
- Figur 9: eine Ansicht X des Greifers gemäß Figur 8,
- Figur 10: eine Seitenansicht eines zweiten Greifers des Ablängautomaten gemäß Figur 1,
- Figur 11: eine Ansicht Y des Greifers gemäß Figur 10,
- Figur 12: eine Seitenansicht einer stehend angeordneten Ausführungsform eines erfindungsgemäßen Ablängautomaten,
- Figur 13: einen Querschnitt durch die Spanneinrichtung des Ablängautomaten gemäß Figur 12,
- Figur 14: einen Querschnitt durch einen Greifer des Ablängautomaten gemäß Figur 12 und
- Figur 15: eine Seitenansicht der Abschäleinrichtung des Ablängautomaten gemäß Figur 12.

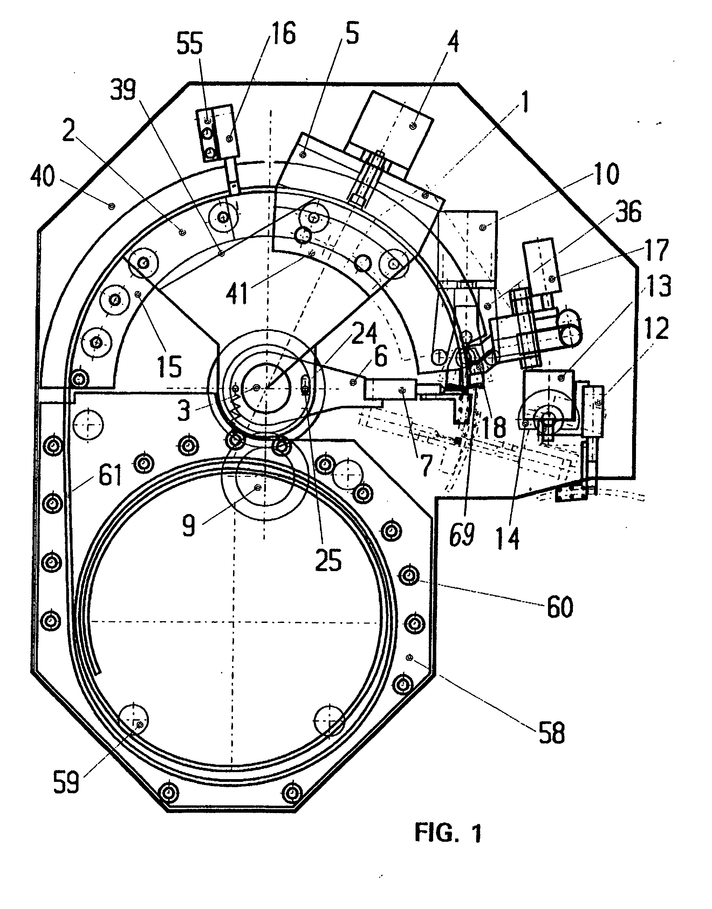

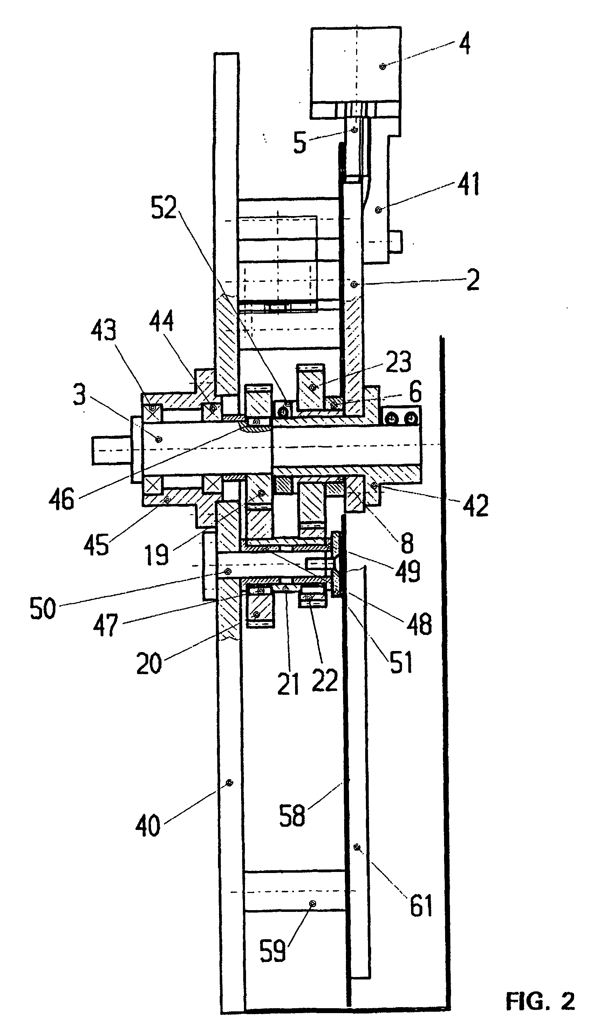

Die in den Figuren 1 und 2 gezeigte Ausführung eines Ablängautomaten ist zur Herstellung von Auswuchtgewichten mit einer Länge zwischen 5 und 100 mm aus einem Materialstrang 61 bestimmt. Der lose aufgerollte Materialstrang 61 hat einen rechteckigen Querschnitt und besteht aus einem biegsamen Material großer Dichte, z.B. Blei. Die beim Aufrollen nach außen gekehrte Breitseite des Materialstrangs 61 ist mit einem selbstklebenden Haftstreifen versehen, der durch einen abziehbaren Folienstreifen aus Kunststoff abgedeckt ist.

Das Arbeitsprinzip des Ablängautomaten besteht darin, daß der Endbereich des Materialstrangs 61 von einer Spannvorrichtung 1 gegen eine zylindrische Umfangsfläche an der Außenseite eines Kreissegments 2 gedrückt wird und dadurch die gewünschte Krümmung erhält. Außerdem wird bei gespannter Spannvorrichtung 1 durch Drehen einer mit dem Kreissegment 2 fest verbundenen Welle 3 um einen bestimmten Drehwinkel der gekrümmte Endbereich des Materialstrangs 61 in Richtung einer Schneidevorrichtung 69 transportiert. Da das Kreissegment 2 sich nur über einen begrenzten Winkel der Transportstrecke erstreckt, ist ferner, um ein Knicken des Materialstrangs 61 zu vermeiden, auf einer Grundplatte 40 ein Führungselement 15 aus Blech verankert, welches ebenfalls als Kreissegment gestaltet ist. Da sich das Führungselement 15 und das Kreissegment 2 in der zurückgefahrenen Stellung des Kreissegments 2 überlappen, ist das Kreissegment 2 mit einer schrägen Nut 39 versehen, die das Führungselement 15 aufnimmt. Durch das Zusammenwirken des Führungselements 15 und des Kreissegments 2 kann der Materialstrang 61 beim Transport kontinuierlich in dem vorgegebenen Radius gebogen werden.

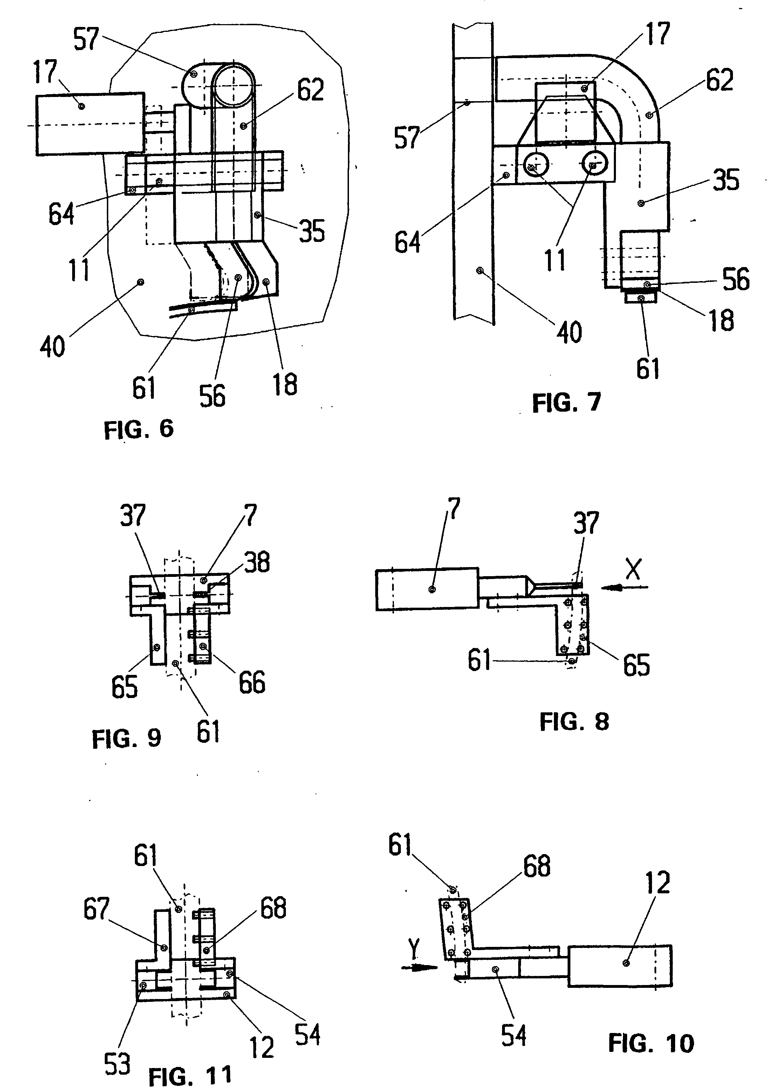

Beim Drehen des Kreissegments 2 im Uhrzeigersinn in der Darstellung gemäß Figur 1 wird der von der gespannten Spannvorrichtung 1 an dem Kreissegment 2 festgehaltene Materialstrang 61 weiter transportiert und ein bei einem vorangegangenen Transportvorgang gebogenes Endstück des Materialstrangs 61, welches nachfolgend abgetrennt werden soll, wird über die Schneidkante der Schneidevorrichtung 69 geschoben. Bei diesem Vorgang wird unmittelbar vor der Schneidevorrichtung 69 der Folienstreifen, der die Klebefläche des Haftstreifens schützt, von dem Haftstreifen getrennt und über einen Spalt zwischen einem Hohlkehlmesser 18 und einer Folienführung 56 durch ein Rohr 62 an der Unterseite der Grundplatte 40 ausgegeben, vgl. Figuren 6 und 7. Das eigentliche Trennen des Folienstreifens von dem Haftstreifen wird einmalig beim Einlegen eines neuen Materialstrangs 61 mit Hilfe des durch einen Linearzylinder 17 bewegten Hohlkehlmessers 18 durchgeführt. Hierbei wird zunächst beim Einlegen eines neuen Materialstrangs 61 ein Referenzschnitt durchgeführt, welcher eine saubere Kante am Ende des Materialstrangs 61 garantiert. Gleichzeitig wird hierbei durch eine zweite, zurückgesetzte Kante eines Schneidstahls 32 der Schneidevorrichtung 69 unmittelbar hinter der Schnittkante Druck auf den Folienstreifen und den darunter befindlichen, aus einer Art Schaumstoff bestehenden Haftstreifen ausgeübt. Dies hat zur Folge, daß sichder Folienstreifen direkt an der Schnittkante löst und leicht nach oben biegt, wodurch das Hohlkehlmesser 18 leichter zwischen Folienstreifen und Haftstreifen gelangen kann. Zum Abschälen des Folienstreifens wird durch Zurückdrehen des Kreissegments 2 der Materialstrang 61 ein solches Stück zurückgefahren, daß seine Vorderkante von dem Hohlkehlmesser 18 erreicht werden kann. Durch Betätigen des Linearzylinders 17 dringt das Hohlkehlmesser 18 zwischen Folienstreifen und Haftstreifen ein und schält dadurch von dem Haftstreifen den Folienstreifen ab, der dann beim weiteren Transport des Materialstrangs 61 über das Hohlkehlmesser 18, die Folienführung 56 und das Rohr 62 abgeführt und an der Unterseite der Grundplatte 40 ausgegeben wird.

Auf der Austrittsseite der Schneidevorrichtung 69 befindet sich ein von einem Mitnehmer 6 getragener Greifer 7, der das abgetrennte Endstück festhält. Der Greifer 7 ist durch ein Zahnradgetriebe 9 mit der Welle 3 gekuppelt. Das Zahnradgetriebe 9 ist so ausgelegt, daß sich der Mitnehmer 6 jeweils um die Hälfte des Winkels dreht, um den die Welle 3 gedreht wird. Durch diese Kopplung befindet sich der Greifer 7, wenn die Schnittkante der Schneidevorrichtung 69 von dem Endabschnitt des Materialstrangs 61 überfahren wird, unabhängig von der Länge des abzuschneidenden Endstücks jeweils in der Mitte desselben. Vor dem eigentlichen Trennschnitt wird das Endstück von dem Greifer 7 gegriffen. Sobald das Endstück abgetrennt ist, fährt der Greifer 7 angetrieben durch die Welle 3 in eine End- bzw. Übergabeposition. Während dieses Vorgangs wird der Materialstrang 61 durch einen mittels einer Zwischenplatte 55 an der Grundplatte 40 befestigten Greifer 16 festgehalten und die Spannvorrichtung 1 entspannt. In der Übergabeposition wird mittels eines Greifers 12, der an einem Drehzylinder und einem Linearzylinder 13 befestigt ist, das abgetrennte Endstück abgeholt und einem Bediener übergeben. Als letzte Aktion fahren, angetrieben durch die Welle 3, das Kreissegment 2 mit der gelösten Spannvorrichtung 1 und der Greifer 7 in ihre Anfangsposition zurück. Ein neuer Zyklus kann nun beginnen.

Wie aus Figur 2 zu ersehen, ist die Vorrichtung auf einer stabilen Grundplatte 40 aufgebaut. Zentrales Element ist das an der Welle 3 angebrachte Kreissegment 2, an dessen äußerem Ende sich ein Linearzylinder 4 befindet. Dieser Linearzylinder 4 ist über eine Platte 41 mit Schrauben am Kreissegment 2 befestigt. Der Linearzylinder 4 führt eine lineare Bewegung in Richtung des Drehpunktes der Welle 3 aus und ermöglicht mit Hilfe einer Spannbacke 5 das Biegen bzw. Spannen des Materialstrangs 61 gegen die äußere Umfangsfläche des Kreissegments 2. Das Kreissegment 2 ist über eine Büchse 42 fest mit der Welle 3 verbunden, indem es mit der Büchse 42 verschraubt und die Büchse 42 mittels Schrauben auf der Welle 3 festgeklemmt ist. Die Welle 3 ist in Lagern 43, 44 drehbar gelagert, die in der mit der Grundplatte 40 verschraubten Büchse 45 angeordnet sind. Die Drehung der Welle 3 um einen bestimmten Winkel wird von einem nicht dargestellten Antrieb vorgenommen, der an die Welle 3 angeflanscht wird. Ein Zahnrad 19 ist über eine Paßfeder 46, die in eine Nut in der Welle 3 eingreift, drehfest mit der Welle 3 verbunden. Die Drehbewegung des Zahnrads 19 wird 1:1 auf ein Zahnrad 20 übertragen, welches sich auf einer Büchse 21 befindet und durch eine Paßfeder 47 drehfest mit dieser verbunden ist. Die Büchse 21 ist über Büchsen 48, 49 drehbar auf einer Welle 50 gelagert und koppelt das Zahnrad 20 mit einem Zahnrad 22. Die Büchse 21 ist mittels einer von einer Schraube gehaltenen Scheibe 51 in axialer Richtung auf der Welle 50 fixiert.

Das Zahnrad 22 ist in Eingriff mit einem doppelt so großen Zahnrad 23, das drehbar auf einer mittels Kreuzlochmutter 52 fixierten Büchse 8 gelagert ist. Das Gesamtübersetzungsverhältnis beider Zahnradstufen beträgt somit 2:1. Neben dem Zahnrad 23 ist auf der Büchse 8 der Mitnehmer 6 drehbar gelagert, an dem der Greifer 7 angeschraubt ist. Im Mitnehmer 6 ist ein Langloch 24 vorhanden, das einen im Zahnrad 23 veränkerten Stift 25 aufnimmt. Das Zahnrad 23 ist also nicht fest mit dem Mitnehmer 6 verbunden, sondern hat ein entsprechendes Spiel, um welches sich der Mitnehmer 6 gegenüber dem Zahnrad 23 drehen kann. Dieses Spiel ist durch einen in einem Gewindeloch des Mitnehmers 6 befindlichen Gewindestift 63 einstellbar. Durch eine Feder 26 wird der Stift im Langloch und somit auch der Mitnehmer 6 gegenüber dem Zahnrad 23 in einer Endlage fixiert.

Die Kopplung des Kreissegments 2 mit dem den Greifer 7 tragenden Mitnehmer 6 über die Welle 3 und das beschriebene Zahnradgetriebe 9 sorgt dafür, daß bei einer Drehung der Welle 3 um einen bestimmten Drehwinkel der Greifer 7 jeweils um den halben Drehwinkel und in der gleichen Drehrichtung wie das Kreissegment 2 gedreht wird. Hierdurch wird erreicht, daß unabhängig von der Länge des abzuschneidenden Endstücks dieses immer exakt in der Mitte von dem Greifer 7 gegriffen wird.

Durch die elastische Kupplung zwischen dem Mitnehmer 6 und dem Zahnrad 23 kann der Mitnehmer 6 Lageänderungen des gegriffenen Endstücks ausgleichen, die durch das Verdrängen von Material beim Schneidvorgang verursacht werden. Der Greifer 7 bewegt sich dabei während des Schnittes mit dem Endstück leicht aus seiner zuvor eingenommenen Position heraus, kehrt aber, wenn die Schneidevorrichtung 69 wieder öffnet bzw. die Übergabeposition angefahren wird, in die ursprüngliche, durch den Stift 25 definierte Lage gegenüber dem Zahnrad 23 zurück.

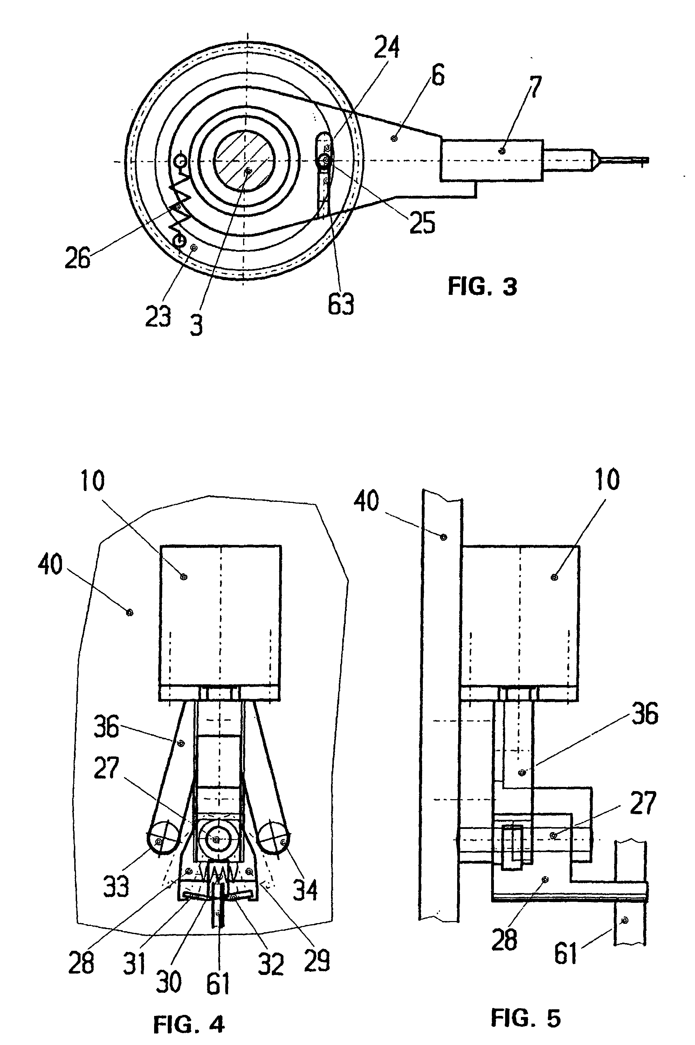

Die in den Figuren 4 und 5 gezeigte Schneidevorrichtung 69 weist zwei Segmente 28, 29 auf, welche jeweils an einer Büchse befestigt sind und mit Hilfe dieser auf einer mit der Grundplatte 40 verbundenen Welle 27 drehbar gelagert sind. Die Segmente 28, 29 werden durch eine Druckfeder 30 auseinander gedrückt. Jedes Segment 28 bzw. 29 trägt an seinem schwenkbaren Ende einen Schneidstahl 31 bzw. 32, der in einer Aufnahme festgeklemmt ist. Die Schneidebewegung der Segmente 28, 29 wird mit Hilfe eines Linearzylinders 10 erzeugt, der mit der Grundplatte 40 verschraubt ist. An der Kolbenstange des Linearzylinders 10 befindet sich eine gegabelte Kulisse 36, die an ihren beiden den Segmenten 28, 29 benachbarten Enden drehbar gelagerte Röllchen 33, 34 trägt. Durch Ausfahren der Kolbenstange des Linearzylinders 10 werden die zwischen den Röllchen 33, 34 befindlichen Segmente 28, 29 zusammengedrückt. Die Segmente 28, 29 sind hinsichtlich ihrer Länge und ihres Schwenkwinkels so dimensioniert, daß beim Öffnen der Schneidevorrichtung 69 die Schneidstähle 31, 32 den Greifer 7 nicht behindern. Aus dem gleichen Grund sind auch der Zylinder 10, die Kulisse 36 und die Segmente 28, 29 außerhalb der Transportebene des Materialstrangs auf der Grundplatte 40 angebracht. Um den beim Schneiden entstehenden Längenversatz des Materials möglichst gering zu halten, sind die Schneidstähle 31, 32 mit einer Fase von 15° versehen. Diese Fase verhindert außerdem, daß die Schneidstähle 31, 32 beim Schneiden von Endstücken sehr kleiner Länge nach dem Schnitt mit dem Backen des Greifers 7 kollidieren.

In der Endstellung des Greifers 7 befindet sich diesem gegenüber ein weiterer Greifer 12. Dieser ist an einen Linearzylinder 13 angeschraubt, welcher an der Welle eines Drehzylinders 14 befestigt ist, der um 105° schwenken kann. Der Drehzylinder 14 ist mittels Schrauben direkt an der Grundplatte befestigt. Mit Hilfe des Greifers 12 kann das abgetrennte Endstück in der die Übergabeposition bildenden Endstellung des Greifers 7 abgeholt werden. Hierzu schwenkt der Drehyzlinder 14 in die entsprechende Position und der Linearzylinder 13 fährt den Greifer 12 vor. Sobald der Greifer 12 sich in Greifposition befindet, greifen die Greiferbacken 53, 54, welche als Zweifinger-Backen mit zusätzlichem Führungsteil 67, 68 ausgeführt sind, um die Finger der Backen 37, 38 des Greifers 7 herum. Sobald das abgeschnittene Endstück gegriffen wird und der Greifer 7 entspannt, fährt der Linearzylinder 13 den Greifer 12 zurück, so daß beim anschließenden Schwenken des Drehzylinders 14 das abgeschnittene Endstück auch bei größtmöglicher Länge nicht mit dem Greifer 7 kollidiert. Bei dem Schwenkvorgang wird das abgeschnittene Endstück durch eine Öffnung, in dem die Grundplatte 40 umgebenden Gehäuse dem Bediener präsentiert.

Nach Beendigung eines Arbeitszyklus werden das Kreissegment 2 mit der Spannvorrichtung 1 und der Greifer 7 von der Endposition in die Anfangsposition zurückgefahren. Hierbei darf die Position des Endbereichs des Materialstrangs 61 relativ zur Schnittkante der Schneidstähle 31, 32 nicht verändert werden. Dies wird mit Hilfe des Greifers 16 erreicht, der den Materialstrang 61 fixiert.

Das Hohlkehlmesser 18 zum Abschälen des Folienstreifens und eine Folienführung 56 sind, wie aus den Figuren 6 und 7 zu ersehen, an einem Führungskörper 35 befestigt, der an einem mit der Grundplatte 40 verschraubten Basiskörper 64 bzw. einer Rundführung 11 verschiebbar geführt ist und mit einem Linearzylinder 17 verbunden ist. An dem Führungskörper 35 befindet sich weiterhin ein um 90° gebogenes Rohr 62, welches über ein Loch im Führungskörper 35 mit dem zwischen dem Hohlkehlmesser 18 und der Folienführung 56 befindlichen Spalt in Verbindung steht. Das Rohr 62 endet an einem Langloch 57 in der Grundplatte 40, durch welches der von dem Hohlkehlmesser 18 abgeschälte Folienstreifen an der Unterseite der Maschine ausgegeben wird.

Der lose aufgewickelte Materialstrang 61 wird auf einer Platte 58 abgelegt. Da der Materialstrang 61 sich in der Ebene des Kreissegments 2 befinden muß, ist die Platte 58 über Distanzbüchsen 59 entsprechender Länge auf der Grundplatte 40 befestigt. Eine Führung des Materialstrangs 61 bis zum Greifer 16 wird über mehrere auf der Platte 58 bzw. der Grundplatte 40 angebrachte Röllchen 60 bewerkstelligt.

Bei den vorstehend genannten Linearzylindern kann es sich um pneumatisch, hydraulisch oder elektrisch betätigbare Aktoren handeln, die einen linearen Krafthub ausführen können.

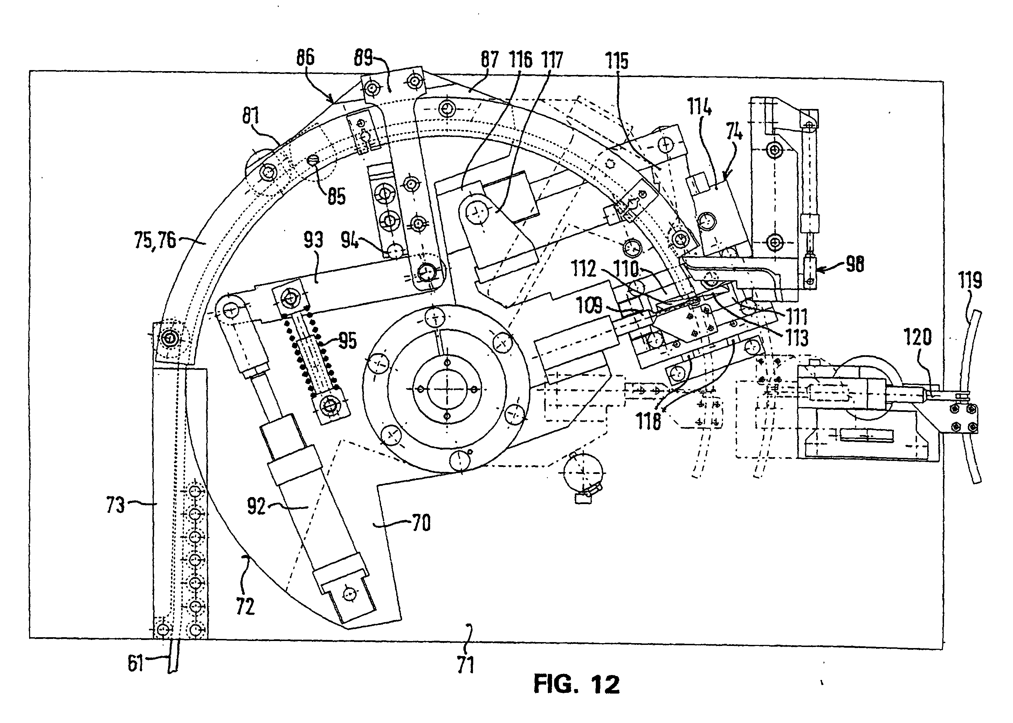

Der in Figur 12 gezeigte Ablängautomat gleicht in seinem grundsätzlichen Aufbau der vorstehend beschriebenen Ausführungsform, unterscheidet sich von dieser jedoch in der Ausgestaltung einiger Bauelemente und ist in erster Linie für eine stehende Anordnung seines Kreissegments 70 und seiner Grundplatte 71 bestimmt. Das Kreissegment 70 erstreckt sich über einen Winkel von etwa 180° und ist in Bezug auf die annähernd vertikale Zuführung des Materialstrangs 61 so angeordnet, daß der Materialstrang 61 in jeder möglichen Winkelstellung des Kreissegments 70 tangential auf dessen zylindrische Umfangsfläche 72 aufläuft. Hierdurch wird der Materialstrang 61 beim Auflaufen auf das Kreissegment 70 gebogen und es bedarf keiner gebogenen Gleitführung, die den Materialstrang zum Kreissegment hinführt. Es genügt stattdessen eine gerade Einführtülle 73 mit einem vertikal ausgerichteten Einführkanal, durch den der Materialstrang 61 von einer unterhalb des Kreissegments 70 angeordneten, nicht dargestellten Rolle in den Arbeitsbereich des Kreissegments 70 geleitet wird. Durch die Einführtülle 73 wird vor allem auch das Einfädeln des Anfangsabschnitts eines neu eingelegten Materialstrangs erleichtert.

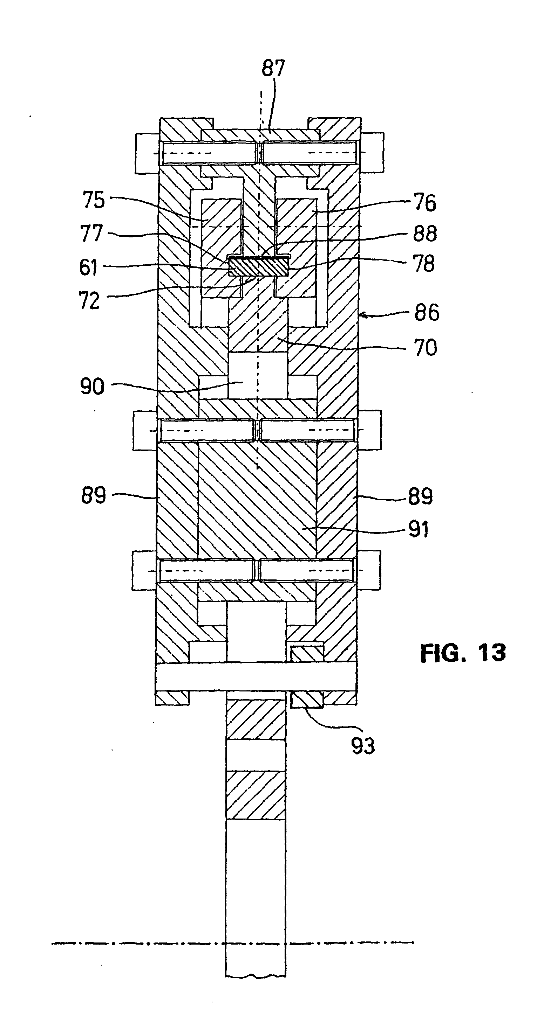

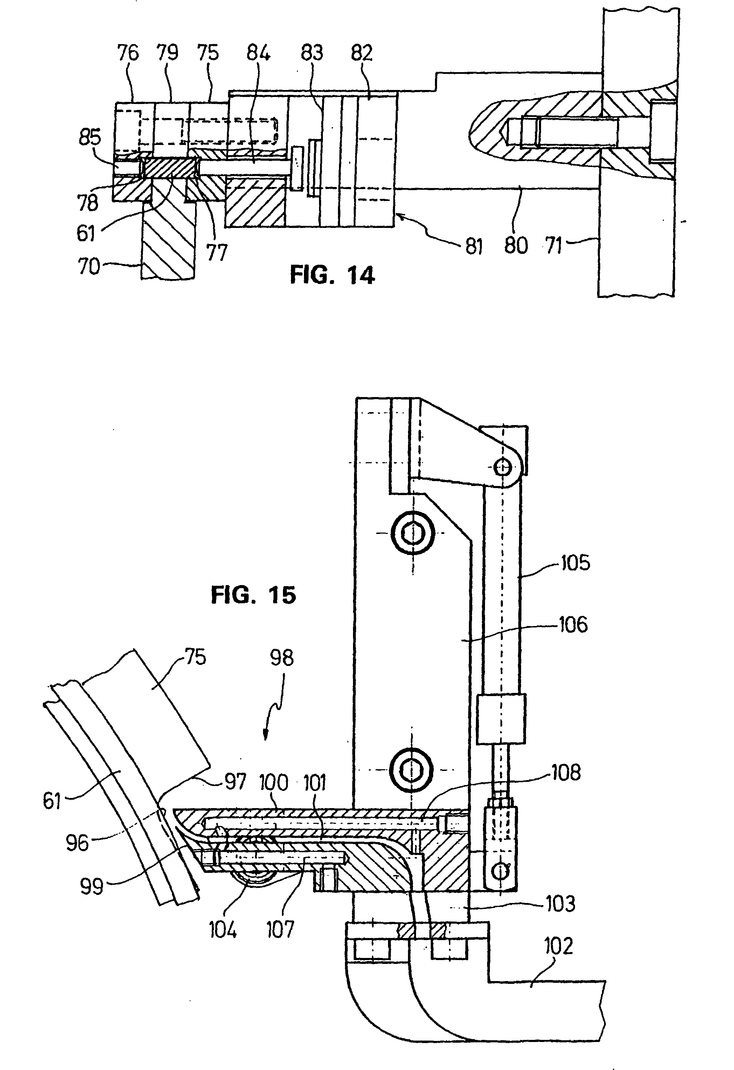

Um zu verhindern, daß der im Querschnitt rechteckige Materialstrang von der Umfangsfläche 72 des Kreissegments abrutschen kann und um den gebogenen Endbereich des Materialstrangs 61 in dem Abschnitt zwischen dem in Transportrichtung vorderen Ende des Kreissegments 70 und der Schneidevorrichtung 74 zu halten und zu führen, wenn das Kreissegment 70 sich in der in Figur 12 gezeigten Stellung befindet, sind in symmetrischer Anordnung beiderseits des Kreissegments 70 gebogene Führungselemente 75, 76 vorgesehen, die an die Umfangsfläche 72 angrenzende Nuten 77, 78 zur Aufnahme der seitlichen Ränder des Materialstrangs 61 aufweisen, vergl. Figuren 13 und 14. Die Führungselemente 75, 76 sind an mehreren Stellen, eine ist in Figur 14 gezeigt, durch Distanzstücke 79 auf Abstand gehalten und an Stützen 80 angeschraubt, die an der Grundplatte 71 befestigt sind.

Figur 14 zeigt weiterhin die Ausbildung eines Greifers 81, mit dem der Materialstrang 61 an den Führungselementen 75, 76 festgehalten werden kann. Der Greifer 81 weist ein an der Stütze 80 befestigtes Gehäuse 82 und einen in dem Gehäuse 82 angeordneten pneumatischen Membranzylinder 83 zur Betätigung eines Stößels 84 auf. Der Stößel 84 ist in einer Bohrung im Gehäuse 82 geführt und erstreckt sich durch eine Bohrung in dem Führungselement 75 bis zu der in der Nut 77 befindlichen Seitenfläche des Materialstrangs 61. Weiterhin ist in dem Führungselement 76 in einer in die Nut 78 mündenden, zum Stößel 84 koaxialen Gewindebohrung eine Schraube 85 angeordnet, die als Widerlager beim Festspannen des Materialstrangs 61 dient. Wird der Membranzylinder 83 mit Druckluft beaufschlagt, so drückt er den Stößel 84 gegen den Materialstrang 61, wodurch dieser zwischen der Schraube 85 und dem Stößel 84 festgespannt wird. Durch Einstellen der Schraube 85 kann erreicht werden, daß der Materialstrang 61 beim Festspannen eine Mittelstellung zwischen den seitlichen Begrenzungsflächen der Nuten 77, 78 einnimmt.

Die zum Festspannen und zusätzlichen Biegen des Materialstrangs 61 vorgesehene Spannvorrichtung 86 ergibt sich aus den Figuren 12 und 13. Sie weist eine sich über einen Umfangswinkel des Kreissegments 70 von etwa 50° erstreckende Spannbacke 87 auf, die in den Zwischenraum zwischen den Führungselementen 75, 76 hineinragt und einer der Umfangsfläche 72 gegenüberliegende gebogene Spannfläche 88 hat, deren Krümmungsradius um das Dickenmaß des Materialstrangs 61 größer ist, als der Krümmungsradius der Umfangsfläche 72. Die Spannbacke 87 ist an zwei beiderseits des Kreissegments 70 angeordneten, die Führungselemente 75, 76 umgreifenden Trägern 89 befestigt, die mit einem in einem radialen Schlitz 90 des Kreissegments 70 radial beweglich angeordneten Kulissenstein 91 durch Schrauben fest verbunden sind. Über die Träger 89 und den Kulissenstein 91 wird somit die Spannbacke 87 radial geführt und in Umfangsrichtung sowie in axialer Richtung am Kreissegment 70 abgestützt. Zum Andrücken der Spannbacke 87 an den Materialstrang 61 ist an dem Kreissegment 70 ein doppelt wirkender Hubzylinder 92 gelagert, dessen Kolbenstange durch einen zweiarmigen Hebel 93 mit dem radial inneren Ende der Träger 89 gelenkig verbunden ist. Der Drehpunkt des Hebels 93 wird von einem in der Nähe des Trägers 89 auf dem Kreissegment 70 befestigten Anschlagnocken 94 gebildet, an dem sich der Hebel 93 beim Festspannen der Spannbacke 87 abstützt, Zwischen dem Anschlagnocken 94 und dem Hubzylinder 92 greift an dem Hebel 93 eine Druckfeder 95 an, die ebenfalls an dem Kreissegment 70 abgestützt ist und den Hebel 93 mit einer die Spannbacke 87 andrückenden Federkraft beaufschlagt. Die Spannvorrichtung 86 befindet sich daher immer in Spannstellung, wenn der Hubzylinder 92 drucklos ist. Hierdurch wird sichergestellt, daß beim Stillstand des Ablängautomaten oder bei Ausfall der Druckenergie der Materialstrang 61 auf dem Kreissegment 70 festgehalten wird und sich nicht durch sein Eigengewicht gegenüber dem Kreissegment 70 verschieben kann. Im Betrieb wird in der Spannstellung der Spannvorrichtung 86 durch Druckbeaufschlagung des Hubzylinders 92 in Ausfahrrichtung der Kolbenstange die Anpreßkraft der Spannbacke 87 erhöht, um den Materialstrang 61 exakt in die durch die Umfangsfläche 72 vorgegebene Krümmungsform biegen zu können. Zum Lösen der Spannvorrichtung 86 wird der Hubzylinder 92 in entgegengesetzter Richtung mit Druck beaufschlagt, wodurch die Kolbenstange unter Spannen der Druckfeder 95 in das Zylindergehäuse einfährt. Hierbei sorgt die Druckfeder 95 dafür, daß der Kontakt zwischen dem Hebel 93 und dem Anschlagnocken 94 bestehen bleibt und die Spannbacke 87 radial nach außen bewegt wird und dadurch den Materialstrang 61 freigibt.

An ihrem der Schneidevorrichtung 74 benachbarten Ende haben die Führungselemente 75, 76 an ihrem radial äußeren Rand eine Aussparung 97, die sich bis in die Nuten 77, 78 hinein erstreckt. Im Bereich der Aussparung 97 ist daher die mit Haftstreifen und Folienstreifen beschichtete Außenfläche 96 des Materialstrangs 61 frei zugänglich. In die Aussparung 97 hinein ragt eine Abschälvorrichtung 98, mit der der Folienstreifen von dem Haftstreifen gelöst und kontinuierlich abgeleitet werden kann.

Figur 15 zeigt die Abschälvorrichtung 98 im Detail. Sie besteht aus einem Hohlkehlmesser 99 und einem Führungselement 100, welches in geringem Abstand von dem Hohlkehlmesser 99 angeordnet ist und gemeinsam mit diesem einen Kanal 101 zum Ableiten eines Folienstreifens bildet. Das Austrittsende des Kanals 101 mündet in einem Führungsrohr 102, welches über ein Zwischenstück 103, an dem Hohlkehlmesser 99 und dem Führungselement 100 befestigt ist. Das Hohlkehlmesser 99 und das Führungselement 100 sind fest miteinander verbunden und mit Hilfe eines Drehlagers 104 um eine zur Achse des Kreissegments 70 parallele Achse schwenkbar gelagert. Das Führungselement 100 ist an seinem von dem Drehlager 104 entfernten Ende mit der Kolbenstange eines Hubzylinders 105 gelenkig verbunden, der an einem mit der Grundplatte verbundenen Halter 106 befestigt ist. Zum automatischen Abschälen des Folienstreifens vom Anfangsende eines neu eingelegten Materialstrangs 61 wird der Hubzylinder 105 derart angesteuert, daß seine Kolbenstange angezogen und das Hohlkehlmesser 99 mit dem Führungselement 100 entgegen dem Uhrzeigersinn soweit geschwenkt wird, daß seine Schneide den Folienstreifen des herangeführten Materialstrangs untergreift und in den Kanal 101 lenkt. Ist der Folienstreifen einmal in den Kanal 101 eingeführt, so kann das Hohlkehlmesser 99 wieder in die in Figur 15 gezeigte Position gefahren werden, da der Folienstreifen beim Weitertransport des Materialstrangs 61 nun von allein in den Kanal 101 gelangt. In dem Kanal 101 wird der Transport des Folienstreifens durch einen Luftstrom unterstützt, der über Kanalbohrungen 107 und 108 in dem Hohlkehlmesser 99 und dem Führungselement 100 dem Kanal 101 zugeführt wird. Die Kanalbohrungen 107, 108 sind hierzu über nicht dargestellte Leitungen mit einer Druckluftquelle verbunden.

Die Schneidevorrichtung 74 weist zwei plattenförmige, aufeinanderliegende Führungskörper 110, 111 auf, an denen die Schneidstähle 112, 113 befestigt sind. Die Führungskörper 110, 111 sind in einem Gehäuse 114 mittels einer durch Rollen gebildeten Linearführung in einer zum Kreissegment 70 parallelen Ebene radial verschiebbar geführt. Zum Bewegen der Führungskörper 110, 111 ist ein Hebel 115 vorgesehen, der in dem Gehäuse 114 auf einem Achszapfen schwenkbar gelagert ist und über Nocken die Führungskörper 110, 111 mit den Schneidstählen 112, 113 in beiden Bewegungsrichtungen antreibt. Zur Betätigung des Hebels 115 dient ein doppelt wirkender Hubzylinder 116, der an einem mit dem Gehäuse 114 verbundenen Halter 117 befestigt ist. Das Gehäuse 114 ist auf einem auf zwei parallelen Säulen 118 geführten Schlitten befestigt und dadurch tangential zur Schnittstelle des Materialstrangs 61 verschiebbar. Hierdurch kann das Gehäuse 114 beim Schneiden einer Tangentialbewegung der Schneidstähle 112, 113 bezogen auf den Materialstrang 61 folgen, so daß Zwangskräfte vermieden werden.

Figur 12 zeigt den Ablängautomaten in der Endstellung nach dem Herstellen und Ausgeben eines als Ausgleichsgewicht bestimmten Endstücks 119 durch den Ausgabegreifer 120. Diese Endstellung ist zugleich die Anfangsstellung zur Herstellung des nächsten Endstücks definierter Länge. In dieser Stellung befindet sich das Ende des Materialstrangs 61 an der Schneidkante der Schneidevorrichtung 74, die Schneidevorrichtung 74 ist geöffnet, die Spannvorrichtung 86 ist durch die Kraft der Druckfeder 95 in Schließstellung gehalten und der Greifer 81 ist geschlossen. Hiervon ausgehend wird zunächst durch Ansteuerung des Hubzylin-ders 92 die Spannvorrichtung 86 zusätzlich gespannt und der Greifer 81 entspannt. Anschließend wird das Kreissegment 70 durch einen Stellantrieb im Uhrzeigersinn soweit gedreht, bis der erreichte Drehwinkel der vorgegebenen Längedes nächsten Endstücks entspricht. Hierbei wird ein der Länge des Endstücks entsprechender Endabschnitt des Materialstrangs 61 durch die Schneidevorrichtung 74 hindurchgeschoben. Ist die vorgegebene Drehwinkelstellung erreicht, so wird das Kreissegment 70 angehalten und durch Ansteuern des Greifers 81 der Materialstrang 61 an den Führungselementen 75, 76 festgespannt. Gleichzeitig wird der auf der Ausgangsseite der Schneidevorrichtung 74 angeordnete Greifer 109 in seine Spannstellung gesteuert. Durch die kinematische Kopplung des Greifers 109 mit dem Kreissegment 70 befindet sich der Greifer 109 jetzt in einer um den halben Drehwinkel des Kreissegments 70 im Uhrzeigersinn verschwenkten Position, so daß seine Backen das aus der Schneidevorrichtung 74 herausragende Endstück in der Mitte greifen. Sobald die Greifer 81, 109 gespannt sind, wird die Schneidevorrichtung 74 betätigt und das von dem Greifer 109 gehaltene Endstück wird von dem Materialstrang 61 abgetrennt. Zur Ausgabe des abgetrennten Endstücks wird die Spannvorrichtung 86 in die Lösestellung gebracht und danach wird das Kreissegment 70 durch seinen Antrieb im Uhrzeigersinn bis in die strichpunktiert wiedergegebene Endstellung gedreht. Der Greifer 109 gelangt hierdurch in die strichpunktiert wiedergegebene Übergabeposition, in der er das Endstück an den Greifer 120 übergeben kann. Der Greifer 120 wird aus der gezeigten Ausgabestellung im Uhrzeigersinn um 180° in die strichpunktiert wiedergegebene Stellung geschwenkt. Anschließend wird der Greifer 120 in einer Geradführung soweit nach links verschoben, daß er das abgetrennte Endstück greifen kann. Der Greifer 120 schließt und danach öffnet der Greifer 109. Anschließend kehrt der Greifer 120 in die Ausgangslage zurück, wodurch das abgetrennte Endstück in die Ausgabeposition gebracht wird, aus der es von Hand oder mit Hilfe eines Roboters entnommen werden kann. Sobald der Greifer 120 das Endstück von dem Greifer 109 entfernt hat, werden das Kreissegment 70 bei geöffneter Spannvorrichtung 86 und mit ihm der Greifer 109 entgegen dem Uhrzeigersinn in ihre Ausgangsstellung zurückgeschwenkt. Der Ablängzyklus ist damit beendet und der nächste Ablängzyklus kann beginnen.

## Patentansprüche

1. Vorrichtung zum Biegen und Abtrennen eines Endstücks von einem Materialstrang, insbesondere aus Schwermetall, mit einem den Endbereich des Materialstrangs (61) in eine Schneidevorrichtung (69) transportierenden Stellglied und einer gekrümmten Führungs- und Verformungsbahn für den Endbereich des Materialstrangs (61), **dadurch gekennzeichnet, daß** das Stellglied ein mit einer drehbar gelagerten Welle (3) fest verbundenes, scheibenförmiges Kreissegment (2) aufweist, dessen auf einem Kreisbogen liegende Umfangsfläche konzentrisch zur Drehachse der Welle (3) angeordnet ist, daß angrenzend an die Umfangsfläche des Kreissegments (2) ein feststehendes Führungselement (15) vorgesehen ist, das mit dem Kreissegment (2) die Führungs- und Verformungsbahn für den Endbereich des Materialstrangs (61) bildet, daß das Kreissegment (2) eine Spannvorrichtung (1) trägt, durch die der Endbereich des Materialstrangs (61) auf der Umfangsfläche des Kreissegments (2) festspannbar ist, daß ein Greifer (16) vorgesehen ist, durch den der Endbereich des Materialstrangs (61) an dem Führungselement (15) festhaltbar ist und daß das Kreissegment (2) durch einen Antrieb in einem begrenzten Drehwinkelbereich in beiden Drehrichtungen bewegbar und der Drehwinkel des Kreissegments (2) zur Bestimmung der Länge des von dem Materialstrang (61) abzutrennenden Endstücks durch den Antrieb steuerbar ist.

2. Vorrichtung nach Anspruch 1, **dadurch gekennzeichnet, daß** das Kreissegment (70) sich entgegen der Transportrichtung soweit über die Zuführstelle des Materialstrangs (61) hinaus erstreckt, daß der über eine im wesentlichen gerade Bahn zugeführte Materialstrang (61) in allen Stellungen des Kreissegments (2) tangential auf die Umfangsfläche (72) des Kreissegments (70) aufläuft.

3. Vorrichtung nach Anspruch 2, **dadurch gekennzeichnet, daß** die Drehachse des Kreissegments (2) horizontal angeordnet ist und der Materialstrang (61) im wesentlichen senkrecht von unten auf die Umfangsfläche (72) des Kreissegments (70) geführt wird.

4. Vorrichtung nach einem der vorhergehenden Ansprüche, **dadurch gekennzeichnet, daß** die Spannvorrichtung (1, 86) des Kreissegments (2, 70) eine Spannbacke (5, 87) aufweist, die eine der Umfangsfläche gegenüberliegende, gekrümmte Spannfläche hat, deren Krümmungsradius um das radiale Dickenmaß des Materialstrangs (61) größer ist als der Krümmungsradius der Umfangsfläche.

5. Vorrichtung nach Anspruch 4, **dadurch gekennzeichnet, daß** an dem Kreissegment (70) ein zweiarmiger Hebel (93) angeordnet ist, dessen einer Hebelarm mit der Spannbacke (87) und dessen anderer Hebelarm mit einer Betätigungsvorrichtung (92) verbunden ist.

6. Vorrichtung nach Anspruch 5, **dadurch gekennzeichnet, daß** an dem Kreissegment (70) und an dem zweiarmigen Hebel (93) zwischen dem Drehpunkt und dem Anlenkpunkt der Betätigungsvorrichtung (92) eine Rückstellfeder (95) abgestützt ist, deren Federkraft in Betätigungsrichtung auf den Hebel (93) einwirkt.

7. Vorrichtung nach einem der vorhergehenden Ansprüche, **dadurch gekennzeichnet, daß** auf beiden Seiten des Kreissegments (70) Führungselemente (75, 76) in symmetrischer Anordnung vorgesehen sind.

8. Vorrichtung nach einem der vorhergehenden Ansprüche, **dadurch gekennzeichnet, daß** die Umfangsfläche (72) des Kreissegments (70) eine geringere axiale Breite hat als der Materialstrang (61) und daß das Führungselement (75 bzw. 76) aus einer gebogenen, neben dem Umfangsrand des Kreissegments (70) angeordneten Schiene mit einer sich in Längsrichtung der Schiene erstreckenden, konzentrisch zur Drehachse des Kreissegments (70) gebogenen Führungsnut (77 bzw. 78) besteht, deren radial innere Führungsfläche unmittelbar an die Umfangsfläche (72) des Kreissegments (70) angrenzt.

9. Vorrichtung nach einem der Ansprüche 7 oder 8, **dadurch gekennzeichnet, daß** der Materialstrang (61) durch einen an einem Führungselement (75) befestigten Greifer (81) festhaltbar ist, wobei der Greifer (81) einen mit einer Betätigungskraft beaufschlagbaren Stößel (84) aufweist, der an eine Seitenfläche des Materialstrangs (61) andrückbar ist und dem ein die entgegengesetzte Seitenfläche des Materialstrangs (61) abstützendes Widerlager gegenüberliegt.

10. Vorrichtung nach einem der vorhergehenden Ansprüche, **dadurch gekennzeichnet, daß** auf der dem Kreissegment (2, 70) abgekehrten Seite der Schneidevorrichtung (69, 74) ein Greifer (7, 109) für das aus der Schneidevorrichtung herausragende, abzutrennende Endstück vorgesehen ist.

11. Vorrichtung nach Anspruch 10, **dadurch gekennzeichnet, daß** der Greifer (7) in Transportrichtung des Materialstrangs (61) derart bewegbar ist, daß er den halben Transporthub des Kreissegments (2) ausführt.

12. Vorrichtung nach Anspruch 11, **dadurch gekennzeichnet, daß** der Greifer (7) auf der Welle (3) des Kreissegments (2) frei drehbar gelagert und durch ein Getriebe (9) mit einem Übersetzungsverhältnis von 2 mit dem Kreissegment (2) verbunden ist.

13. Vorrichtung nach Anspruch 12, **dadurch gekennzeichnet, daß** der Greifer (7) über eine einseitig wirkende elastische Kupplung mit dem Getriebe (9) gekuppelt ist.

14. Vorrichtung nach einem der vorhergehenden Ansprüche, **dadurch gekennzeichnet, daß** die Schneidevorrichtung (74) auf einem Schlitten angeordnet ist, der tangential zur Drehachse des Kreissegments (70) beweglich gelagert ist.

15. Vorrichtung nach einem der vorhergehenden Ansprüche, **dadurch gekennzeichnet, daß** die Schneidevorrichtung (69) zwei auf einer Welle (27) drehbar gelagerte, jeweils einen Schneidstahl (31, 32) tragende Segmente (28, 29) aufweist, die durch eine Feder (30) auseinander gedrückt werden, und daß die Segmente (28, 29) zwischen zwei an den Enden einer Kulisse (36) angebrachten Rollen (33, 34) angeordnet und durch eine sich von der Welle (27) entfernende Bewegung der Kulisse (36) zueinander bewegbar sind.

16. Vorrichtung nach einem der vorhergehenden Ansprüche, **dadurch gekennzeichnet, daß** der Materialstrang (61) auf seiner dem Kreissegment (70) abgekehrten Außenseite (96) einen von einem Folienstreifen abgedeckten Haftstreifen aufweist und daß auf der dem Kreissegment (70) zugekehrten Seite der Schneidevorrichtung (74) eine an die Außenseite des Materialstrangs (61) anstellbare Abschälvorrichtung (98) zum Abtrennen und Abführen des Folienstreifens angeordnet ist.

17. Vorrichtung nach Anspruch 16, **dadurch gekennzeichnet, daß** die Abschälvorrichtung (98) ein Hohlkehlmesser (99) und ein dem Hohlkehlmesser (99) benachbartes Führungselement (100) aufweist, und daß zwischen dem Hohlkehlmesser (99) und dem Führungselement (100) ein Kanal (101) zur Führung des Folienstreifens gebildet ist, durch den der Folienstreifen mit Hilfe eines Blasluftstroms transportiert wird.

## Claims

1. Device for bending and separating an end piece from a material strand, in particular made of heavy metal, with a control member conveying the end region of the material strand (61) into a cutting device (69) and a curved guide and deformation track for the end region of the material strand (61), **characterised in that** the control member comprises a disc-shaped segment of a circle (2) rigidly connected to a rotatably mounted shaft (3), the peripheral face of the segment of a circle (2) which is located on an arc of a circle being arranged concentrically to the axis of rotation of the shaft (3), **in that** provided adjacent to the peripheral face of the segment of a circle (2) is a fixed guide element (15) forming, with the segment of a circle (2), the guide and deformation track for the end region of the material strand (61), **in that** the segment of a circle (2) carries a clamping device (1), by means of which the end region of the material strand (61) can be clamped on the peripheral face of the segment of a circle (2), **in that** a gripper (16) is provided, by which the end region of the material strand (61) can be fixed to the guide element (15) and **in that** the segment of a circle (2) can be moved in both directions of rotation in a limited angle of rotation range by a drive and the angle of rotation of the segment of a circle (2) can be controlled by the drive to determine the length of the end piece to be separated from the material strand (61).

2. Device according to claim 1, **characterised in that** the segment of a circle (70) extends counter to the conveying direction beyond the feed point of the material strand (61) to such an extent that the material strand (61) fed via a substantially straight track runs in all the positions of the segment of a circle (2) tangentially to the peripheral face (72) of the segment of a circle (70).

3. Device according to claim 2, **characterised in that** the axis of rotation of the segment of a circle (2) is arranged horizontally and the material strand (61) is guided substantially perpendicularly from below to the peripheral face (72) of the segment of a circle (70).

4. Device according to any one of the preceding claims, **characterised in that** the clamping device (1, 86) of the segment of a circle (2, 70) comprises a clamping jaw (5, 87) having a curved clamping face opposing the peripheral face, the radius of curvature of the clamping face being greater than the radius of curvature of the peripheral face by the radial thickness measurement of the material strand (61).

5. Device according to claim 4, **characterised in that** arranged on the segment of a circle (70) is a two-armed lever (93) of which one lever arm is connected to the clamping jaw (87) and of which the other lever arm is connected to an actuating device (92).

6. Device according to claim 5, **characterised in that** supported on the segment of a circle (70) and on the two-armed lever (93) between the fulcrum and the linking point of the actuating device (92) is a restoring spring (95), of which the spring force acts on the lever (93) in the actuating direction.

7. Device according to any one of the preceding claims, **characterised in that** guide elements (75, 76) are provided in symmetrical arrangement on the two sides of the segment of a circle (70).

8. Device according to any one of the preceding claims, **characterised in that** the peripheral face (72) of the segment of a circle (70) has a smaller axial width than the material strand (61) and **in that** the guide element (75 or 76) consists of a bent rail arranged next to the peripheral edge of the segment of circle (70) and comprising a bent guide groove (77 or 78) extending in the longitudinal direction of the rail and bent concentrically to the axis of rotation of the segment of a circle (70), the radially inner guide face of the guide groove (77 or 78) being directly adjacent to the peripheral face of the segment of a circle (70).

9. Device according to either of claims 7 or 8, **characterised in that** the material strand (61) can be held by a gripper (81) fastened on a guide element (75), the gripper (81) comprising a ram (84) which can be loaded with an actuating force, the ram (84) being pressable onto a lateral face of the material strand (61) and remote from which is an abutment supporting the opposing lateral face of the material strand (61).

10. Device according to any one of the preceding claims, **characterised in that** on the side, remote from the segment of a circle (2, 70), of the cutting device (69, 74) is provided a gripper (7, 109) for the end piece to be separated protruding from the cutting device.

11. Device according to claim 10, **characterised in that** the gripper (7) can be moved in the conveying direction of the material strand (61) in such a way that it carries out half the conveying lift of the segment of a circle (2).

12. Device according to claim 11, **characterised in that** the gripper (7) is mounted freely rotatably on the shaft (3) of the segment of a circle (2) and is connected to the segment of a circle (2) by a gearing (9) with a translation ratio of 2.

13. Device according to claim 12, **characterised in that** the gripper (7) is coupled to the gearing (9) via an elastic coupling acting on one side.

14. Device according to any one of the preceding claims, **characterised in that** the cutting device (74) is arranged on a cradle movably mounted tangentially to the axis of rotation of the segment of a circle (70).

15. Device according to any one of the preceding claims, **characterised in that** the cutting device (69) comprises two segments (28, 29) rotatably mounted on a shaft (27) and each bearing a cutter (31, 32), the segments (28, 29) being pressed apart by a spring (30) and **in that** the segments (28, 29) are arranged between two rollers (33, 34) provided at the ends of a link (36) and can be moved toward one another by a movement of the link (36) away from the shaft (27).

16. Device according to any one of the preceding claims, **characterised in that** the material strand (61) on its outer side (96) remote from the segment of the circle (70) comprises an adhesive strip covered by a film strip and **in that** on the side of the cutting device (74) facing the segment of a circle (70) is arranged a peeling device (98) which can be placed on the outer side of the material strand (61) for separating and removing the film strip.

17. Device according to claim 16, **characterised in that** the peeling device (98) comprises a fluting knife (99) and a guide element (100) adjacent to the fluting knife (99), and **in that** formed between the fluting knife (99) and the guide element (100) is a duct (101) for guiding the film strip, through which duct (101) the film strip is conveyed with the aid of a stream of blowing air.

## Revendications

1. Dispositif pour cintrer et couper une extrémité d'un cordon de matière, en particulier en métal lourd, avec un organe de commande transportant la section finale du cordon de matière (61) dans un dispositif de coupe (69), et une glissière de guidage et de mise en forme cintrée pour la section finale du cordon de matière (61), **caractérisé en ce que** l'organe de commande est muni d'un segment circulaire (2) en forme de disque et fixé à un arbre (3) pouvant tourner, et dont la surface périphérique située sur un arc de cercle est concentrique à l'axe de rotation de l'arbre (3), **en ce qu'**un élément de guidage (15) est prévu près de la surface périphérique du segment circulaire (2) formant avec le segment circulaire (2) la glissière de guidage et de mise en forme pour la section finale du cordon de matière (61), **en ce que** le segment circulaire (2) porte un dispositif de serrage (1) avec lequel la section finale du cordon de matière (61) peut être serrée sur la surface périphérique du segment circulaire (2), **en ce qu'**une griffe (16) est prévue avec laquelle la section finale du cordon de matière (61) peut être maintenue sur l'élément de guidage (15), et **en ce que** le segment circulaire (2) peut être déplacé dans les deux sens par un mécanisme d'entraînement dans un domaine d'angle de rotation limité et l'angle de rotation du segment circulaire (2) pouvant être commandé par le mécanisme d'entraînement pour déterminer la longueur de l'extrémité à séparer du cordon de matière (61).

2. Dispositif selon la revendication 1, **caractérisé en ce que** le segment circulaire (70) s'étend en direction opposée à la direction de transport suffisamment au-delà du point d'introduction du cordon de matière (61) pour que le cordon de matière (61) introduit par un chemin essentiellement droit soit dans toutes les positions du segment circulaire (2) tangentiel à la surface périphérique (72) du segment circulaire (70).

3. Dispositif selon la revendication 2, **caractérisé en ce que** l'axe de rotation du segment circulaire (2) est disposé horizontalement et le cordon de matière (61) est guidé du bas essentiellement verticalement sur la surface périphérique (72) du segment circulaire (70).

4. Dispositif selon l'une des revendications précédentes, **caractérisé en ce que** le dispositif serrage (1, 86) du segment circulaire (2, 70) est muni d'une mâchoire de serrage (5, 87) qui a une surface de serrage cintrée en face de la surface périphérique et dont le rayon de cintrage est plus grand de l'épaisseur radiale du cordon de matière (61) que le rayon de cintrage de la surface périphérique.

5. Dispositif selon la revendication 4, **caractérisé en ce qu'**un levier à deux branches (93) est disposé sur le segment circulaire (70) et dont un bras de levier est relié à la mâchoire de serrage (87) et dont l'autre bras de levier est relié à un dispositif d'actionnement (92).

6. Dispositif selon la revendication 5, **caractérisé en ce qu'**un ressort de rappel (95) prend appui sur le segment circulaire (70) et sur le levier à deux branches (93) entre le centre de rotation et le point d'articulation du dispositif d'actionnement (92) et dont la force de ressort agit sur le levier (93) en direction de l'actionnement.

7. Dispositif selon l'une des revendications précédentes, **caractérisé en ce que** des éléments de guidage (75, 76) sont prévus des deux côtés du segment circulaire (70) en une disposition symétrique.

8. Dispositif selon l'une des revendications précédentes, **caractérisé en ce que** la surface périphérique (72) du segment circulaire (70) a une largeur axiale plus petite que le cordon de matière (61) et **en ce que** l'élément de guidage (75 ou 76) est constitué d'un rail cintré disposé à côté du bord périphérique du segment circulaire (70) avec une rainure de guidage (77 ou 78) s'étendant dans la direction longitudinale du rail et cintrée concentriquement à l'axe de rotation du segment circulaire (70) et la surface de guidage radiale de ladite rainure de guidage est directement attenante à la surface périphérique (72) du segment circulaire (70).

9. Dispositif selon l'une des revendications 7 ou 8, **caractérisé en ce que** le cordon de matière (61) peut être maintenu fermement par une griffe (81) fixée à un élément de guidage (75), la griffe (81) étant munie d'un poussoir (84) pouvant être soumis à une force d'actionnement et pouvant être pressé sur une face latérale du cordon de matière (61) et, en face dudit poussoir, d'une butée supportant la face latérale opposée du cordon de matière (61).

10. Dispositif selon l'une des revendications précédentes, **caractérisé en ce qu'**une griffe (7, 109) est prévue sur le côté du dispositif de coupe (69, 74) opposé au segment circulaire (2, 70) pour l'extrémité à séparer dépassant du dispositif de coupe.

11. Dispositif selon la revendication 10, **caractérisé en ce que** la griffe (7) peut être déplacée dans la direction de transport du cordon de matière (61) de telle sorte qu'elle accomplit la moitié de la course de transport du segment circulaire (2).

12. Dispositif selon la revendication 11, **caractérisé en ce que** la griffe (7) peut pivoter librement sur l'axe (3) du segment circulaire (2) et est reliée au segment circulaire (2) par un mécanisme d'entraînement (9) avec un rapport de transmission de 2.

13. Dispositif selon la revendication 12, **caractérisé en ce que** la griffe (7) est accouplée au mécanisme d'entraînement (9) au moyen d'un accouplement élastique agissant dans un seul sens.

14. Dispositif selon l'une des revendications précédentes, **caractérisé en ce que** le dispositif de coupe (74) est disposé sur un chariot monté de sorte à être mobile tangentiellement à l'axe de rotation du segment circulaire (70).

15. Dispositif selon l'une des revendications précédentes, **caractérisé en ce que** le dispositif de coupe (69) est muni de deux segments (28, 29) pouvant pivoter sur un arbre (27) et portant chacun une lame en acier (31, 32) et qui sont écartés l'un de l'autre par un ressort (30), et **en ce que** les segments (28, 29) sont disposés entre deux rouleaux (33, 34) placés à l'extrémité d'une coulisse (36) et peuvent être déplacés l'un vers l'autre au moyen d'un mouvement de la coulisse (36) l'éloignant de l'arbre (27).

16. Dispositif selon l'une des revendications précédentes, **caractérisé en ce que** le cordon de matière (61) est muni sur son côté extérieur (96) opposé au segment circulaire (70) d'une bande adhésive recouverte par un ruban de film et **en ce qu'**un dispositif de décollage (98) pouvant être déplacé sur le côté extérieur du cordon de matière (61) est disposé sur le côté du dispositif de coupe (74) dirigé vers le segment circulaire (70) pour séparer et éliminer le ruban de film.

17. Dispositif selon la revendication 16, **caractérisé en ce que** le dispositif de ponçage (98) est muni d'un couteau concave (99) et d'un élément de guidage (100) attenant au couteau concave (99), et **en ce qu'**un canal (101) est formé entre le couteau concave (99) et l'élément de guidage (100) pour diriger la bande de film et à travers lequel la bande de film est transportée à l'aide d'un courant d'air soufflé.
